# EUROPEAN PATENT APPLICATION

(11) **EP 4 725 716 A1**
(43) Date of publication of application: **15.04.2026**
(21) Application number: 24839633.5
(22) Date of filing: 04.07.2024
(51) Int. Cl.: B60C 11/03, B60C 11/12

(54) **TIRE**

(30) Priority: 13.07.2023 JP 2023114969
(71) Applicant: The Yokohama Rubber Co., Ltd., Hiratsuka-shi, Kanagawa 254-8601 (JP)
(72) Inventor: SUGA, Yuichi, Hiratsuka-shi, Kanagawa 254-8601 (JP)
(74) Representative: Dilg, Haeusler, Schindelmann Patentanwaltsgesellschaft mbH
(86) International application number: PCT/JP2024/024190
(87) International publication number: WO 2025/013741

(57) **Abstract**

To improve wear resistance performance while ensuring performance on ice and snow and wet performance. A pneumatic tire (1) includes: a circumferential main groove (31) linearly formed along a tire circumferential direction; a circumferential groove (32) formed along the tire circumferential direction and including the inclined portion (32A) that is inclined in a predetermined direction with respect to the tire circumferential direction and continues in a zigzag shape in the tire circumferential direction; a circumferential auxiliary groove (33) that is provided between the circumferential groove (32) and the circumferential main groove (31), is adjacent to the inclined portion (32A) in the tire width direction, and is inclined in a direction opposite to the predetermined direction of the inclined portion (32A) with respect to the tire circumferential direction; a width-direction connecting groove (34) connecting both ends (32Aa, 33a) of the inclined portion (32A) and the circumferential auxiliary groove (33) and defining a block continuing in the tire circumferential direction; and a width-direction auxiliary groove (35) connecting a central portion of the circumferential auxiliary groove (33) and the circumferential main groove (31) and disposed mismatched with the width-direction connecting groove (34).

## Description

### Technical Field

The invention relates to a tire.

### Background Art

For example, in a tire described in Patent Document 1, a block-shaped land portion is defined by a circumferential groove extending in the tire circumferential direction, a circumferential narrow groove extending in the tire circumferential direction, and a plurality of lug grooves extending in the tire width direction, and the circumferential groove and the circumferential narrow groove are formed in a zigzag shape having long portions and short portions having relatively different lengths by extending in the tire circumferential direction and having an amplitude in the tire width direction.

### Citation List

### Patent Literature

Patent Document 1: WO 2022/025172

### Summary of Invention

### Technical Problem

Known studless tires have been considered to have good performance on ice but also need to improve performance on snow. To improve the performance on ice, typically, adhesive frictional force needs to be improved, and for this purpose, a method of improving the actual ground contact area by reducing the groove area ratio or the like is performed. The method has a disadvantage that the performance on snow and wet performance deteriorate. Recent studless tires also need to improve wear resistance.

An object of the invention is to provide a tire that can provide improved wear resistance and ensured performance on ice and snow and wet performance by optimizing the pattern configuration.

### Solution to Problem

To achieve the object described above, a tire according to one aspect of the present invention includes: a circumferential main groove linearly formed along a tire circumferential direction; a circumferential groove formed along the tire circumferential direction and including an inclined portion that is inclined in a predetermined direction with respect to the tire circumferential direction and continues in a zigzag shape in the tire circumferential direction; a circumferential auxiliary groove that is provided between the circumferential groove and the circumferential main groove, is adjacent to the inclined portion in a tire width direction, and is inclined in a direction opposite to the predetermined direction of the inclined portion with respect to the tire circumferential direction; a width-direction connecting groove connecting both ends of the inclined portion and the circumferential auxiliary groove and defining a block continuing in the tire circumferential direction; and a width-direction auxiliary groove connecting a central portion of the circumferential auxiliary groove and the circumferential main groove and disposed mismatched with the width-direction connecting groove.

### Advantageous Effects of Invention

An aspect of the invention can improve wear resistance performance while ensuring performance on ice and snow and wet performance.

### Brief Description of Drawings

FIG. 1 is a meridian cross-sectional view of a pneumatic tire according to an embodiment.
FIG. 2 is a plan view of a tread portion of the pneumatic tire according to an embodiment.
FIG. 3 is a partial enlarged view of the tread portion of the pneumatic tire according to an embodiment.
FIG. 4 is a cross-sectional view taken along line A-A of FIG. 3.
FIG. 5 is a table showing results of performance tests of the pneumatic tire according to an embodiment.
FIG. 6 is a table showing results of performance tests of the pneumatic tire according to an embodiment.
FIG. 7 is a table showing the results of performance tests of the pneumatic tire according to an embodiment.

### Description of Embodiments

The embodiments according to the present invention will be described in detail below with reference to the drawings. The invention is not limited to the embodiments. Constituents of the embodiments include elements that are substitutable while maintaining consistency with the invention, and obviously substitutable elements. The plurality of modified examples described in the embodiments can be combined as desired within the scope apparent to one skilled in the art.

In the following description, the term "tire radial direction" refers to a direction orthogonal to the tire rotation axis (not illustrated), which is a rotation axis of a pneumatic tire 1 of the embodiment, the term "inner side in the tire radial direction" refers to a side toward the tire rotation axis in the tire radial direction, and the term "outer side in the tire radial direction" refers to a side away from the tire rotation axis in the tire radial direction. The term "tire circumferential direction" refers to a circumferential direction with the tire rotation axis as a center axis. The term "tire width direction" refers to a direction parallel with the tire rotation axis, the term "inner side in the tire width direction" refers to a side toward a tire equatorial plane (tire equator line) CL in the tire width direction, and the term "outer side in the tire width direction" refers to a side away from the tire equatorial plane CL in the tire width direction. The term "tire equatorial plane CL" refers to a plane that is orthogonal to the tire rotation axis and that runs through the center of the tire width of the pneumatic tire 1. The tire equatorial plane CL aligns, in a position in the tire width direction, with a center line in the tire width direction corresponding to a center position of the pneumatic tire 1 in the tire width direction. The term "tire equator line" refers to a line in the tire circumferential direction of the pneumatic tire 1 that lies on the tire equatorial plane CL. The term "cross-section in the tire meridian direction (meridian cross-sectional view)" refers to a cross section of the tire taken along a plane that includes the tire rotation axis.

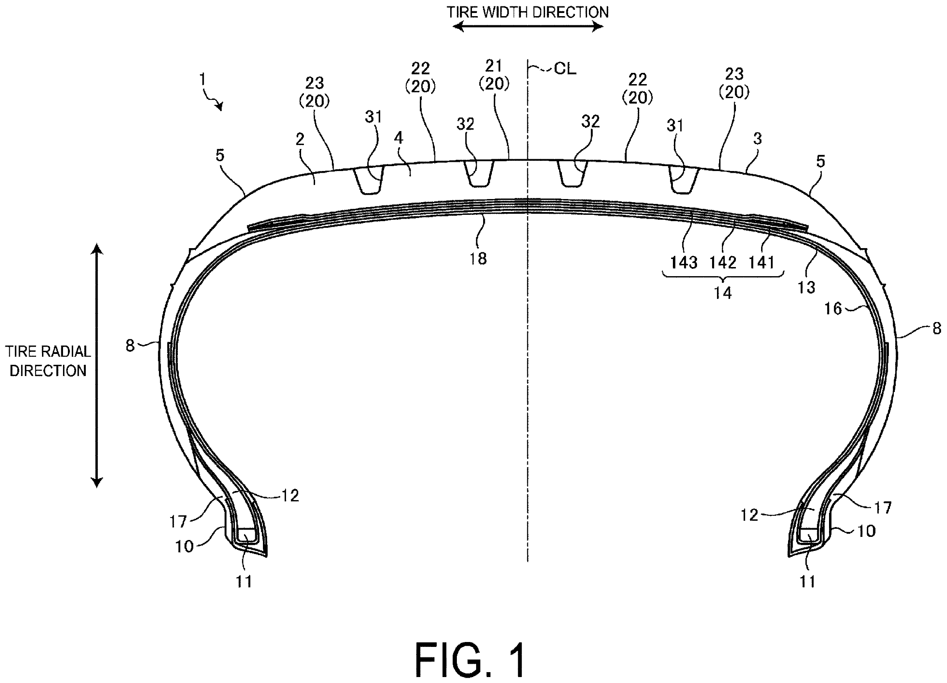

As illustrated in FIG. 1, the pneumatic tire 1 according to the embodiment includes a tread portion 2, a sidewall portion 8, and a bead portion 10.

The tread portion 2 is disposed in an outermost portion in the tire radial direction when viewed in a tire meridian cross-section. The tread portion 2 includes a tread rubber 4 made of a rubber composition. The surface of the tread portion 2, that is, a portion that comes into contact with a road surface during traveling of a vehicle (not illustrated) mounted with the pneumatic tire 1, is formed as a tread ground contact surface 3. The tread ground contact surface 3 constitutes a portion of the contour of the pneumatic tire 1. Shoulder portions 5 are constituted at both outer side ends of the tread portion 2 in the tire width direction.

Sidewall portions 8 are disposed on both sides of the tread portion 2 in the tire width direction and on the inner side of the shoulder portion 5 in the tire radial direction. The sidewall portion 8 is disposed at two sections on both sides in the tire width direction of the pneumatic tire 1 and forms portions exposed to the outermost sides in the tire width direction of the pneumatic tire 1.

The bead portion 10 is disposed on the inner side of the respective sidewall portions 8 in the tire radial direction. The bead portion 10 is disposed at two sections on both sides in the tire width direction, similarly to the sidewall portions 8. The bead portions 10 each include a bead core 11, and a bead filler 12 is provided on the outer side in the tire radial direction of the bead core 11. The bead core 11 is an annular member formed in an annular shape by bundling bead wires which are steel wires. The bead filler 12 is a rubber member disposed on the outer side of the bead core 11 in the tire radial direction.

The pneumatic tire 1 includes a belt layer 14 and a carcass layer 13 as its internal structure.

The belt layer 14 is disposed in the tread rubber 4 of the tread portion 2. The belt layer 14 includes a multilayer structure in which a plurality of belts 141 and 142, and a belt cover 143 are layered. In the present embodiment, the belt layer 14 is formed by layering two belts 141 and 142.

The belts 141 and 142 are formed by covering, with coating rubber, a plurality of belt cords including steel or an organic fiber material such as polyester, rayon, or nylon and by performing a rolling process on the coating rubber-covered belt cords. The belts 141 and 142 have a belt angle, which is defined as an inclination angle of a belt cord with respect to the tire circumferential direction, within a predetermined range (for example, 20° or more and 55° or less). The belt angles of the belts 141 and 142 differ from each other. Therefore, the belts 141 and 142 are configured as a so-called cross-ply structure (cross belt) in which the belt cords are layered with their inclination directions intersecting each other.

The belt cover 143 is formed by covering, with coating rubber, a plurality of belt cover cords including steel or an organic fiber material such as polyester, rayon, or nylon and by performing a rolling process on the coating rubber-covered belt cover cords. The belt cover 143 has a belt angle, which is defined as an inclination angle of the belt cover cord with respect to the tire circumferential direction, within a predetermined range (for example, 0° or more and 10° or less). The belt cover 143 is formed, for example, by winding a strip material formed by coating one or a plurality of belt cover cords with a coating rubber spirally around the tire circumferential direction on the outer side in the tire radial direction of the two-layer belts 141, 142.

The carcass layer 13 is disposed continuously on the inner side in the tire radial direction of the belt layer 14 in the tread portion 2, the sidewall portion 8, and the bead portion 10. Both end portions of the carcass layer 13 in the tire width direction are turned back toward the outer sides in the tire width direction and fixed to wrap the bead cores 11 and the bead fillers 12 in both bead cores 10, and extends in the tire circumferential direction in a toroidal shape, forming a backbone of the tire. The carcass layer 13 has a single-layer structure including one carcass ply or a multilayer structure including a plurality of carcass plies layered. The carcass ply of the carcass layer 13 is formed by covering, with coating rubber, a plurality of carcass cords including steel or an organic fiber material such as aramid, nylon, polyester, or rayon and by performing a rolling process on the coating rubber-covered belt carcass cords. The plurality of carcass cords forming the carcass ply are disposed side by side at an angle in the tire circumferential direction, the angle with respect to the tire circumferential direction being along a tire meridian direction.

A rim cushion rubber 17 is disposed on the inner side in the tire radial direction and on the outer side in the tire width direction of a turned back portion of the carcass layer 13. The rim cushion rubber 17 constitutes a contact surface of the bead portion 10 with a rim flange. An innerliner 16 is formed along the carcass layer 13 on the inner side of the carcass layer 13. The innerliner 16 forms a tire inner surface 18 that is a surface on the inner side of the pneumatic tire 1.

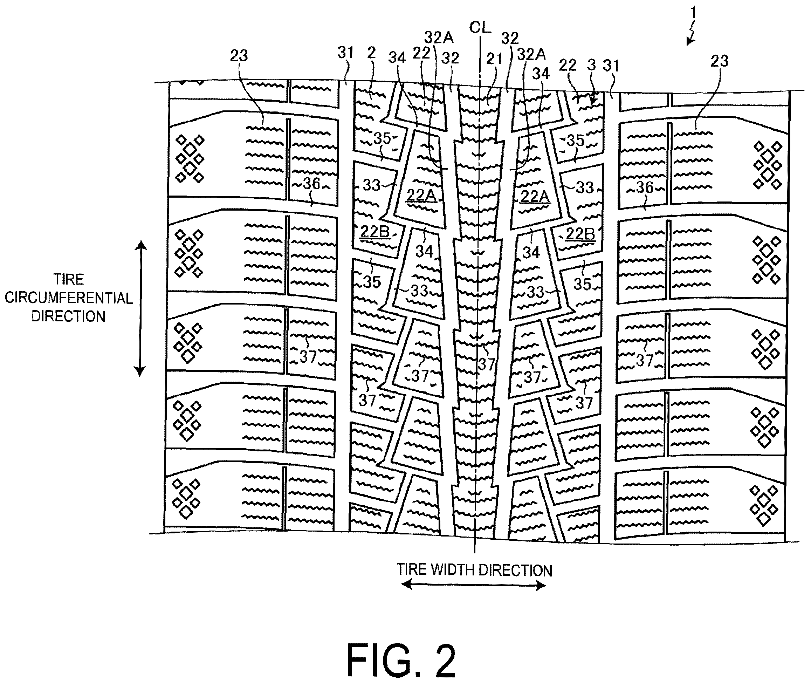

As illustrated in FIGS. 1 and 2, the pneumatic tire 1 of the embodiment includes a tread pattern on the tread ground contact surface 3 in the tread portion 2. Here, dimensions in the tread pattern are measured in an unloaded state where the tire is mounted on a specified rim and inflated to the specified internal pressure.

"Specified rim" refers to a "standard rim" defined by JATMA, a "Design Rim" defined by the Tire and Rim Association, Inc. (TRA), or a "Measuring Rim" defined by the European Tyre and Rim Technical Organisation (ETRTO). "Specified internal pressure" refers to a "maximum air pressure" specified by JATMA, the maximum value in "TIRE LOAD LIMITS AT VARIOUS COLD INFLATION PRESSURES" specified by TRA, or "INFLATION PRESSURES" specified by ETRTO. A specified load refers to a "maximum load capacity" specified by JATMA, the maximum value in "TIRE LOAD LIMITS AT VARIOUS COLD INFLATION PRESSURES" specified by TRA, or "LOAD CAPACITY" specified by ETRTO.

The groove width (also referred to as an opening groove width) is measured as a maximum value of a distance between opposed groove walls of a groove opening portion on the tread ground contact surface 3 when the tire is mounted on a specified rim, inflated to a specified internal pressure, and in an unloaded state. In a configuration in which the groove opening portion includes a notch portion or a chamfered portion, the groove width is measured by using, as end points, intersection points of an extension line of the tread ground contact surface 3 and extension lines of the groove walls in a cross-sectional view parallel with the tire width direction and the tire radial direction.

The groove depth is measured as a maximum value of a distance from the tread ground contact surface 3 to the groove bottom when the tire is mounted on a specified rim, inflated to the specified internal pressure, and in an unloaded state. In a configuration in which partial recessed and protruding portions or a sipe is included at a groove bottom, the groove depth is measured excluding the partial recessed and protruding portions or the sipe.

As illustrated in FIGS. 1 to 4, the pneumatic tire 1 of the embodiment mainly includes a circumferential main groove 31 and a circumferential groove 32 as the tread pattern.

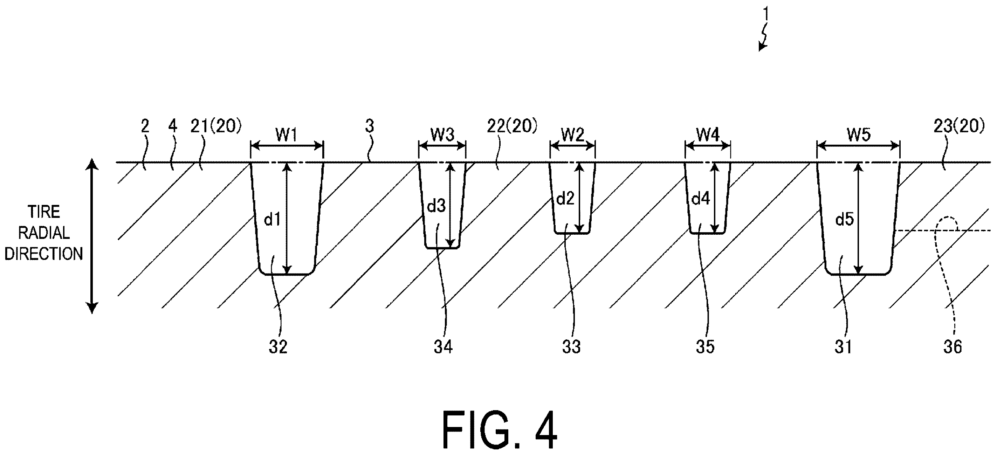

The circumferential main groove 31 extends in the tire circumferential direction and has an annular structure continuously extending along the entire circumference of the tire. Two circumferential main grooves 31 are arranged side by side in the tire width direction with the tire equatorial plane CL interposed therebetween. The circumferential main groove 31 is defined as a groove having a wear indicator as specified by JATMA mandatorily provided. As illustrated in FIG. 4, in the embodiment, the circumferential main groove 31 has a groove width W5 of 4.0 mm or more and 15.0 mm or less and a groove depth d5 of 6.0 mm or more and 10.0 mm or less.

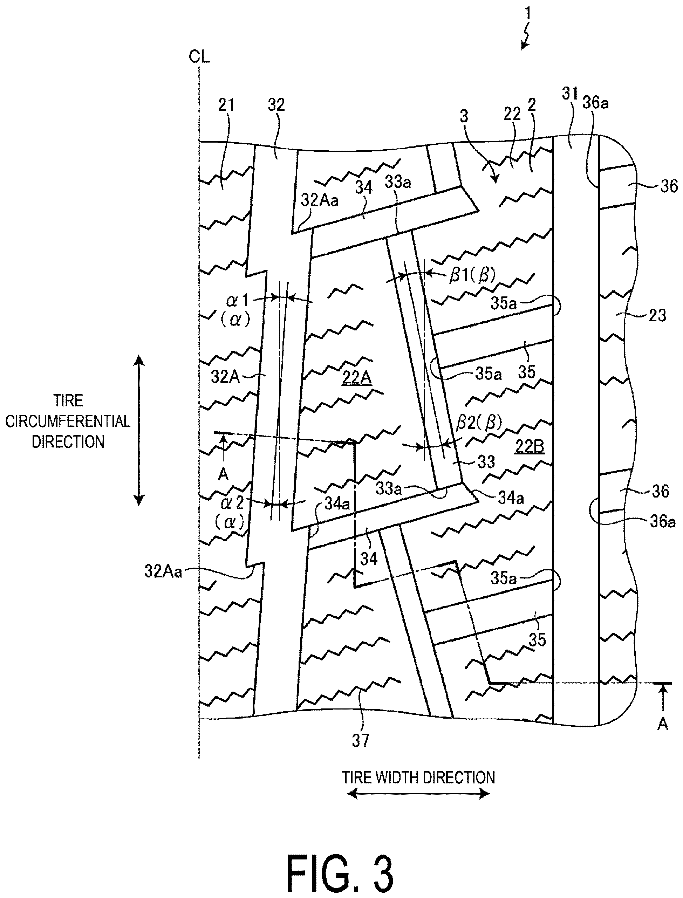

The circumferential groove 32 extends in the tire circumferential direction and has an annular structure continuously extending along the entire circumference of the tire. The two circumferential grooves 32 are arranged side by side in the tire width direction on the inner side of the two circumferential main grooves 31 in the tire width direction, with the tire equatorial plane CL interposed therebetween. As illustrated in FIG. 3, the circumferential groove 32 is formed continuously in a zigzag shape along the tire circumferential direction by connecting inclined portions 32A inclined in a predetermined direction with respect to the tire circumferential direction by communicating ends 32Aa thereof. Each inclined portion 32A is provided in a linear shape along the tire circumferential direction without a bent portion, and a plurality of inclined portions 32A are provided side by side in the tire circumferential direction. In the circumferential groove 32, the degree of zigzag formed by each inclined portion 32A (misalignment dimension of the connection portion of the inclined portion/inclined portion length) is in the relationship 0.05 or more and 0.15 or less. In the embodiment, the inclined portion 32A of the circumferential groove 32 has an inclination angle α with respect to the tire circumferential direction illustrated in FIG. 3, where an angle α1 in one direction is in the range -20° ≤ α1 (α) ≤ -3°, and an angle α2 in the other direction opposite thereto is in the range 3° ≤ α2 (α) ≤ 20°. In this way, the circumferential groove 32 is provided such that the inclined portion 32A is inclined in a predetermined direction with respect to the tire circumferential direction. As illustrated in FIG. 4, in the embodiment, the inclined portion 32A of the circumferential groove 32 has a groove width W1 of 3.0 mm or more and 10.0 mm or less and a groove depth d1 of 6.0 mm or more and 10.0 mm or less.

In the pneumatic tire 1 of the embodiment, a plurality of land portions 20 are defined in the tread portion 2 by two circumferential main grooves 31 and two circumferential grooves 32. The land portions 20 include a center land portion 21, a second land portion 22, and a shoulder land portion 23. The center land portion 21 includes the tire equatorial plane CL between the two circumferential grooves 32 and is formed in a single row in a rib shape along the tire circumferential direction. The second land portion 22 is defined between one circumferential groove 32 and one circumferential main groove 31, and is formed in one row in a rib shape along the tire circumferential direction on each of both outer sides of the center land portion 21 in the tire width direction, that is, in two rows in total. The shoulder land portions 23 are defined on the outer side in the tire width direction of each circumferential main groove 31, and are formed in a rib shape in one row along the tire circumferential direction on the outer side in the tire width direction of each second land portion 22, that is, in two rows in total.

In the pneumatic tire 1, a circumferential auxiliary groove 33, a width-direction connecting groove 34, and a width-direction auxiliary groove 35 are formed in the second land portion 22. In the pneumatic tire 1, a lug groove 36 is formed in the shoulder land portion 23. In the pneumatic tire 1, a sipe 37 is formed in the land portion 20.

The circumferential auxiliary groove 33 is provided between the circumferential main groove 31 and the circumferential groove 32 in the second land portion 22. The circumferential auxiliary groove 33 is provided in a linear shape without a bent portion mainly along the tire circumferential direction, and a plurality of the circumferential auxiliary grooves 33 are provided side by side in the tire circumferential direction. The circumferential auxiliary grooves 33 are each provided adjacent to each of the inclined portions 32A of the circumferential groove 32 in the tire width direction. The circumferential auxiliary groove 33 is provided with both ends 33a terminating inside the second land portion 22. The circumferential auxiliary groove 33 is provided to be inclined in the direction opposite to the inclined portion 32A with respect to the tire circumferential direction. In the embodiment, the circumferential auxiliary groove 33 has an inclination angle β with respect to the tire circumferential direction illustrated in FIG. 3, where an angle β1 in one direction is in the range 3° ≤ β1 (β) ≤ 30°, and an angle β2 in the other direction opposite thereto is in the range -30° ≤ α ≤ 3°. In this manner, the circumferential auxiliary groove 33 is provided to be inclined in the direction opposite to the inclined portion 32A of the circumferential groove 32 with respect to the tire circumferential direction. As illustrated in FIG. 4, in the embodiment, the circumferential auxiliary groove 33 has a groove width W2 of 1.5 mm or more and 6.0 mm or less and a groove depth d2 of 3.0 mm or more and 7.0 mm or less.

In the second land portion 22, the width-direction connecting groove 34 is provided in a linear shape without a bent portion mainly along the tire width direction, and a plurality of the width-direction connecting grooves 34 are provided side by side in the tire circumferential direction. The width-direction connecting grooves 34 are inclined in a predetermined direction with respect to the tire width direction, and are provided in parallel with each other. The width-direction connecting grooves 34 is provided to connect both ends 32Aa of the inclined portion 32A of the circumferential groove 32 and both ends 33a of the circumferential auxiliary groove 33, respectively. Each width-direction connecting groove 34 is provided such that both end portions thereof that connect to the end 32As of the inclined portion 32A and the end 33a of the circumferential auxiliary groove 33 and terminate inside the second land portion 22. By providing the width-direction connecting grooves 34, a first small land portion 22A with a trapezoidal block shape is formed inside the second land portion 22 by one inclined portion 34A of the circumferential groove 32, one circumferential auxiliary groove 33, and two width-direction connecting grooves 34, the two width-direction connecting grooves 34 being arranged side by side in the tire circumferential direction and connecting respective ends 34a and 33a. A plurality of the first small land portions 22A are provided continuously in the tire circumferential direction with the width-direction connecting groove 34 as a boundary. As illustrated in FIG. 4, in the embodiment, the width-direction connecting groove 34 has a groove width W3 of 1.5 mm or more and 5.0 mm or less and a groove depth d3 of 4.0 mm or more and 9.0 mm or less.

In the second land portion 22, the width-direction auxiliary groove 35 is provided in a linear shape without a bent portion mainly along the tire width direction, and a plurality of the width-direction auxiliary groove 35 are provided side by side in the tire circumferential direction. The width-direction auxiliary grooves 35 are each inclined in a predetermined direction with respect to the tire width direction and are provided in parallel to each other. Each of the width-direction auxiliary grooves 35 is provided in parallel with each of the width-direction connecting grooves 34. Each of the width-direction auxiliary grooves 35 is provided to connect the center of each of the circumferential auxiliary grooves 33 and the circumferential main groove 31. Each width-direction auxiliary groove 35 is provided such that both ends 35a thereof that connect to the center of each circumferential auxiliary groove 33 and the circumferential main groove 31 and terminate inside the second land portion 22. The width-direction auxiliary groove 35 connects to the center of the circumferential auxiliary groove 33 does not directly connect to the width-direction connecting groove 34 connecting to the end 33a of the circumferential auxiliary groove 33, and is disposed mismatched with the width-direction connecting groove 34. By providing the width-direction auxiliary grooves 35, the circumferential main groove 31, the two circumferential auxiliary grooves 33 arranged side by side in the tire circumferential direction, a portion of the width-direction connecting groove 34 connecting the two circumferential auxiliary grooves 33, and the two width-direction auxiliary grooves 35 arranged side by side in the tire circumferential direction form a second small land portion 22B with a block shape inside the second land portion 22, the second small land portion 22B having two bent portions on the opposite side of the circumferential main groove 31. A plurality of the second small land portions 22B are continuously provided in the tire circumferential direction with the width-direction auxiliary groove 35 as a boundary. As illustrated in FIG. 4, in the embodiment, the width-direction auxiliary groove 35 has a groove width W4 of 2.0 mm or more and 7.0 mm or less and a groove depth d4 of 6.0 mm or more and 10.0 mm or less.

In the shoulder land portion 23, the lug groove 36 is provided in a linear shape or an arc shape without a bent portion mainly along the tire width direction, and a plurality of the lug grooves 36 are provided side by side in the tire circumferential direction. The lug grooves 36 are provided in parallel to each other. Each lug groove 36 is provided such that one end 36a thereof is connected to the circumferential main groove 31. Each lug groove 36 and each width-direction auxiliary groove 35 are disposed such that the mutual ends 36a and 35a thereof connecting to the opposite sides of the circumferential main groove 31 in the tire width direction do not face each other and are mutually mismatched in the tire circumferential direction. Each of the lug grooves 36 and each of the width-direction auxiliary grooves 35 are alternately arranged one by one in the tire circumferential direction. When the positional relationship of the grooves where centers of the groove widths of the lug groove 36 and the width-direction auxiliary groove 35 match with each other is defined as 0% and 100%, the positional relationship of each of those grooves is in the range 30% or more and 70% or less. In the embodiment, the lug groove 36 has a groove width of 2.5 mm or more and 6.5 mm or less and a groove depth of 2.5 mm or more and 10.0 mm or less in the tread ground contact surface 3.

The sipes 37 are provided in the entire land portion 20 including the center land portion 21, the second land portion 22, and the shoulder land portion 23. A plurality of sipes 37 extends mainly along the tire width direction and is provided side by side in the tire circumferential direction. The sipe 37 is formed in a zigzag shape or a wave shape by repeatedly bending and having an amplitude in the tire circumferential direction. An end of each sipe 37 may terminate inside the land portion 20 or may connect to and open to another groove described above. In the pneumatic tire 1 according to the embodiment, the sipes 37 thus disposed in the land portions 20. Thus, the pneumatic tire 1 is applied to a studless tire that ensures running performance on icy and snowy road surfaces or an all-season tire that ensures running performance in winter.

The sipes 37 are formed in a narrow groove shape on the tread ground contact surface 3. When the pneumatic tire 1 is mounted on a specified rim and placed in an unloaded state under internal pressure conditions of a specified internal pressure, wall surfaces constituting the narrow groove may not contact one another. Meanwhile, in a case where the narrow groove is located in a portion of the road contact surface formed on a flat plate when a load is vertically applied on the flat plate, or in a case where the land portion 20 in which the narrow grooves are formed flexes, the wall surfaces constituting the narrow groove or at least part of portions disposed on the wall surfaces come into contact with each other due to deformation of the land portion 20. In the present embodiment, the sipe 37 has a groove width of 1.0 mm or less, and a groove depth of 1.5 mm or more to 9.0 mm or less.

The sipes 37 may be a so-called three-dimensional sipes or two-dimensional sipes. The three-dimensional sipe here is the sipe 37 having a wall surface in a bent shape with an amplitude in the width direction of the sipe 37 both in a cross-sectional view having a length direction of the sipe 37 as a normal line direction (a cross-sectional view including the width direction and the depth direction of the sipe 37) and a cross-sectional view having the depth direction of the sipe 37 as a normal line direction (a cross-sectional view including the width direction and the length direction of the sipe 37). The two-dimensional sipe means the sipe 37 having a wall surface in a straight shape in any cross-sectional view (a cross-sectional view including the width direction and the depth direction of the sipe 37) having the length direction of the sipe 37 as the normal line direction.

The pneumatic tire 1 of the embodiment does not have grooves other than the grooves 31, 32, 33, 34, 35, and 36, and the sipes 37 described above.

The pneumatic tire 1 of the embodiment constitutes the tread pattern that is symmetrical with respect to the tire equatorial plane CL. In the pneumatic tire 1 of the embodiment, the inclined portion 32A of the circumferential groove 32 and the circumferential auxiliary groove 33 are inclined in the directions opposite to each other, and the first small land portion 22A has a side where the distance therebetween decreases in the tire circumferential direction and a side where the distance therebetween increases in the tire circumferential direction. In the pneumatic tire 1 of the embodiment, the rotation direction is defined such that the side where the inclined portion 32A of the circumferential groove 32 and the circumferential auxiliary groove 33 are narrowed from each other is a step-in side (or a toe side) and the side where they are widened from each other is a kick-out side (or a heel side). Therefore, the traction effect on icy and snowy road surfaces can be significantly obtained. The rotation direction is defined as a rotation direction when a vehicle moves forward at the time of being installed on the vehicle. The rotation direction is indicated by the pneumatic tire 1 including a rotation direction indicator portion (not illustrated) that indicates the tire rotation direction. The rotation direction indicator portion is constituted by, for example, a mark or recesses/protrusions provided on the sidewall portion 8 of the pneumatic tire 1.

When mounting the pneumatic tire 1 according to the present embodiment to a vehicle, the pneumatic tire 1 is mounted on a rim wheel and inflated with air inside to an inflated state, and then mounted to the vehicle. When the vehicle on which the pneumatic tires 1 are mounted travels, the pneumatic tires 1 rotate while, of the tread ground contact surface 3 on the tread portion 2, the tread ground contact surface 3 located at the bottom is in contact with the road surface. When the vehicle on which the pneumatic tires 1 are mounted travels on a dry road surface, the vehicle travels mainly by transmitting a driving force and a braking force to the road surface and generating a turning force by friction forces between the tread ground contact surface 3 and the road surface.

During traveling on wet road surfaces, water between the tread ground contact surface 3 and the road surface enters into each of the grooves 31, 32, 33, 34, 35, and 36, and the sipes 37, and the vehicle travels while draining the water between the tread ground contact surface 3 and the road surface. This allows the tread ground contact surface 3 to easily contact the road surface and the friction between the tread ground contact surface 3 and the road surface provides wet performance, allowing the vehicle to travel.

When the vehicle travels on snow-covered road surfaces, the pneumatic tire 1 presses and compacts snow on the road surface with the tread ground contact surface 3, and the snow on the road surface enters each of the grooves 31, 32, 33, 34, 35, and 36 and is pressed and compacted inside the grooves. In this state, when driving force or braking force acts on the pneumatic tire 1, or when a force in the tire width direction acts due to the vehicle turning, a so-called snow column shear force that is a shear force acting on the snow in the grooves is generated between the pneumatic tire 1 and the snow. During traveling on snow-covered road surfaces, resistance is generated between the pneumatic tire 1 and the road surfaces by the snow column shear force, and thus driving force and braking force can be transmitted to the road surfaces, and snow traction properties can be ensured to have on-snow performance. This allows the vehicle to travel on snow-covered road surfaces.

When the vehicle travels on snow-covered road surfaces or icy road surfaces, the vehicle travels using the edge effect of each of the grooves 31, 32, 33, 34, 35, and 36, and the sipes 37. In other words, during traveling on snow-covered road surfaces or icy road surfaces, the vehicle travels with the use of resistance caused when the edges of each of the grooves 31, 32, 33, 34, 35, and 36, and the sipes 37 are caught on the snow surface or the icy surface. When the vehicle travels on icy road surfaces, water on the surface of the icy road surface is absorbed by the sipes 37 to remove water films between the icy road surface and the tread ground contact surface 3, so that the contact between the icy road surface and the tread ground contact surface 3 is facilitated. As a result, the resistance between the tread ground contact surface 3 and the icy road surface is increased due to a frictional force and the edge effect, and the performance on ice is provided. This allows the vehicle to travel on icy road surfaces.

Each of the grooves 31, 32, 33, 34, 35, and 36, and the sipes 37 formed in the tread portion 2 contribute to ensuring the running performance during traveling on a wet road surface, snow-covered road surfaces, and icy road surfaces. Therefore, for example, to improve wet performance as running performance on wet road surfaces, increasing the groove area of the tread portion 2 is effective. That is, when the groove area, which is the area of each of the grooves 31, 32, 33, 34, 35, 36, and the like is increased, the water on the road surface easily enters into the grooves during traveling on a wet road surface. Therefore, drainage properties of water between the tread ground contact surface 3 and the road surface can be enhanced, and wet performance can be improved.

The increase in groove area is also effective in improving performance on snow, which is the running performance on snow-covered road surfaces. That is, when the groove area is increased, the amount of snow that can enter into each of the grooves 31, 32, 33, 34, 35, and 36 during traveling on snow-covered road surfaces can be increased, and thus snow column shear force acting on the snow that has entered into the grooves can be increased. This allows improving the snow traction properties during traveling on snow-covered road surfaces and improving performance on snow.

Here, when the groove area in the tread portion 2 is increased, the land portion 20 defined by each of the grooves 31, 32, 33, 34, 35, and 36 decreases in volume as the groove area increases. When the volume of the land portion 20 decreases, the land portion 20 decreases rigidity. When the rigidity of the land portion 20 decreases, the land portion 20 easily deforms when a load acts, which makes it easier to flex. When the land portion 20 flexes, the ground contact area of the flexed land portion 20 is reduced, which possibly makes it difficult to ensure running performance.

For example, during traveling on icy road surfaces, in addition to the edge effect by the edge component of the groove, the friction force caused by ground of the tread ground contact surface 3 on icy road surfaces is also important. However, when the rigidity of the land portion 20 decreases by increasing the groove area in the tread portion 2, the land portion 20 easily flexes when a load acts. Thus, the ground contact area is easily reduced, and the running performance by frictional force is possibly difficult to be ensured. As a result of increasing the groove area in the tread portion 2, when the rigidity of the land portion 20 decreases, the land portion 20 easily flexes in braking during traveling on icy road surfaces, and thus the ground contact area easily decreases, and the braking performance on icy road surfaces is possibly easily reduced.

The pneumatic tire 1 of the embodiment includes, as features thereof:
the circumferential main groove 31 linearly formed along the tire circumferential direction;
the circumferential groove 32 formed along the tire circumferential direction and including the inclined portion 32A that is inclined in a predetermined direction with respect to the tire circumferential direction and continues in a zigzag shape in the tire circumferential direction;
the circumferential auxiliary groove 33 that is provided between the circumferential groove 32 and the circumferential main groove 31, is adjacent to the inclined portion 32A in the tire width direction, and is inclined in a direction opposite to the predetermined direction of the inclined portion 32A with respect to the tire circumferential direction;
the width-direction connecting groove 34 connecting both ends 32Aa and 33a of the inclined portion 32A and the circumferential auxiliary groove 33, thereby defining a block continuing in the tire circumferential direction; and
the width-direction auxiliary groove 35 connecting a central portion of the circumferential auxiliary groove 33 and the circumferential main groove 31 and disposed mismatched with the width-direction connecting groove 34.

The pneumatic tire 1 of an embodiment ensures an edge amount by using the circumferential groove 32 having a zigzag shape and obtains performance on ice and causes, by providing the circumferential auxiliary groove 33 in a direction opposite to the zigzag groove, the snow traction index (STI) component not to be biased to a specific angle, improving shear force in snow. The pneumatic tire 1 of the embodiment can enhance drainage properties and improve wet performance by connecting the circumferential groove 32 and the circumferential auxiliary groove 33 by using the width-direction connecting groove 34 and connecting the circumferential auxiliary groove 33 and the circumferential main groove 31 by using the width-direction auxiliary groove 35. The pneumatic tire 1 of the embodiment suppresses a decrease in rigidity of the land portion 20 (second land portion 22) and improves the wear resistance performance by causing the width-direction auxiliary grooves 35 not to match the width-direction connecting grooves 34. As a result, the pneumatic tire 1 according to the embodiment can improve the wear resistance performance while ensuring the performance on ice and wet performance.

In the pneumatic tire 1 of the embodiment, the circumferential auxiliary groove 33 is preferably formed linearly without a bent portion. For example, a bent portion increases the edge amount, but on the other hand, a decrease in rigidity of the land portion 20 (second land portion 22) may occur. In this regard, the pneumatic tire 1 allows the edge amount to be ensured by the circumferential groove 32 having a zigzag shape. Forming the circumferential auxiliary groove 33 linearly prevents a decrease in rigidity of the land portion 20 (second land portion 22) and improves the wear resistance performance.

In the pneumatic tire 1 of the embodiment, the width-direction auxiliary grooves 35 connecting to the circumferential main groove 31 are disposed not facing the lug grooves 36 connecting to the opposite side of the circumferential main groove 31 in the tire width direction and mutually mismatched in the tire circumferential direction.

The pneumatic tire 1 suppresses a decrease in rigidity of the land portion 20 (second land portion 22) and improves the wear resistance performance by causing the width-direction auxiliary grooves 35 not to match the lug grooves 36 with the circumferential main groove 31 as a boundary.

In the pneumatic tire 1 of the embodiment, the width-direction connecting groove 34 connects to the circumferential groove 32 and the circumferential auxiliary groove 33 and terminates inside the land portion 20 (second land portion 22) defined by the circumferential main groove 31 and the circumferential groove 32.

The pneumatic tire 1 suppresses a decrease in rigidity of the land portion 20 (second land portion 22) and improves wear resistance performance by causing the width-direction connecting grooves 34 to terminate.

In the pneumatic tire 1 of the embodiment, the angle α of the inclined portion 32A with respect to the tire circumferential direction is in the range - 20° ≤ α ≤-3° or 3° ≤ α ≤20°.

The pneumatic tire 1, obtains edge components and improves performance on ice and snow when the angle α of the inclined portion 32A is ± 3°or more. The pneumatic tire 1 suppresses deterioration of drainage properties due to the large inclination and ensures wet performance when the angle α of the inclined portion 32A is ± 20°or less. The angle α is preferably set to 5° ≤ α ≤ 10°, thereby improving performance on ice and snow and wet performance.

In the pneumatic tire 1 of the embodiment, the circumferential auxiliary groove 33 has the angle β with respect to the tire circumferential direction in the range 3° ≤ β ≤ 30° or -30° ≤ α ≤ -3°.

The pneumatic tire 1 does not obtain the edge component due to the small inclination and deteriorates performance on ice and snow when the angle β of the circumferential auxiliary groove 33 is ± 3° or more. Edge components are obtained, improving performance on ice and snow. The pneumatic tire 1 allows the inclination to suppress a decrease in block rigidity and ensures wear resistance performance when the angle β of the circumferential auxiliary groove 33 is ± 30°or less. The angle β is preferably set in the range 10° ≤ α ≤ 20°, thereby providing both the performance on ice and snow and the wear resistance performance.

In the pneumatic tire 1 of the embodiment, the groove depth d1 of the inclined portion 32A and the groove depth d2 of the circumferential auxiliary groove 33 satisfy the relationship 0.5 ≤ d2/d1 ≤ 0.7.

The pneumatic tire 1 can ensure the groove widths and obtain drainage properties when d2/d1 is 0.5 or more, improving the wet performance. The pneumatic tire 1 suppresses a decrease in block rigidity and ensures wear resistance performance when d2/d1 is 0.7 or less. Preferably, by setting d2/d1 within the range 0.55 ≤ d2/d1 ≤ 0.65, it is possible to achieve both wet performance and wear resistance performance.

In the pneumatic tire 1 of the embodiment, the groove depth d1 of the inclined portion 32A and the groove depth d3 of the width-direction connecting groove 34 satisfy the relationship 0.7 ≤ d3/d1 ≤ 0.9.

The pneumatic tire 1 can ensure the groove widths and obtain drainage properties when d3/d1 is 0.7 or more, improving the wet performance. The pneumatic tire 1 suppresses a decrease in block rigidity and ensures wear resistance performance when d3/d1 is 0.9 or less. Preferably, by setting d3/d1 within the range 0.75 ≤ d3/d1 ≤ 0.85, it is possible to achieve both wet performance and wear resistance performance.

In the pneumatic tire 1 of the embodiment, the groove width W1 of the inclined portion 32A and the groove width W2 of the circumferential auxiliary groove 33 are in the ranges 3.0 mm ≤ W1 ≤ 10.0 mm and 1.5 mm ≤ W2 ≤ 6.0 mm.

The pneumatic tire 1 can ensure the groove widths and obtain drainage properties when W1 is 3.0 mm or more and W2 is 1.5 mm or more, improving the wet performance. The pneumatic tire 1 suppresses a decrease in block rigidity and ensures wear resistance performance when W1 is 10.0 mm or less and W2 is 6.0 mm or less.

In the pneumatic tire 1 of the embodiment, the groove width W3 of the width-direction connecting groove 34 and the groove width W4 of the width-direction auxiliary groove 35 are in the ranges 1.5 mm ≤ W3 ≤ 5.0 mm and 2.0 mm ≤ W4 ≤ 7.0 mm.

The pneumatic tire 1 can ensure the groove widths and obtain drainage properties when W3 is 1.5 mm or more and W4 is 2.0 mm or more, improving the wet performance. The pneumatic tire 1 suppresses a decrease in block rigidity and ensures wear resistance performance when W3 is 5.0 mm or less and W4 is 7.0 mm or less.

In the pneumatic tire 1 of the embodiment, the plurality of sipes 37 extending along the tire width direction are disposed in the second land portion 22 defined by the circumferential groove 32 and the circumferential main groove 31.

The pneumatic tire 1 can improve the performance on ice by the arrangement of the sipes 37 and apply the pneumatic tire 1 to a studless tire or an all-season tire.

In the pneumatic tire 1 of the embodiment, the sipe 37 is disposed parallel to at least one of the width-direction connecting groove 34 or the width-direction auxiliary groove 35.

The pneumatic tire 1 aligns edge components by disposing the sipes 37 parallel to the width-direction connecting grooves 34 and the width-direction auxiliary grooves 35,, allowing for improving the performance on ice and snow.

In the present embodiment, as described above, the pneumatic tire 1 has been described as an example of a tire. The pneumatic tire 1 can be inflated with any gas including air and inert gas, such as nitrogen. However, the configuration of the tread pattern of the pneumatic tire 1 described in the present embodiment can also be applied to other tires as desired within the scope apparent to one skilled in the art. Examples of other tires include an airless tire and a solid tire.

### Example

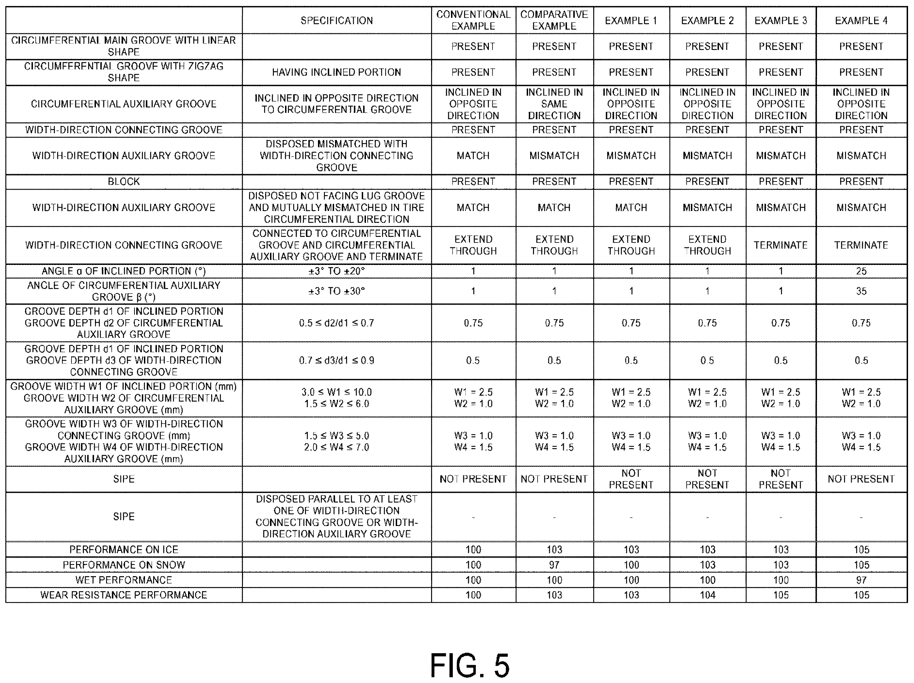

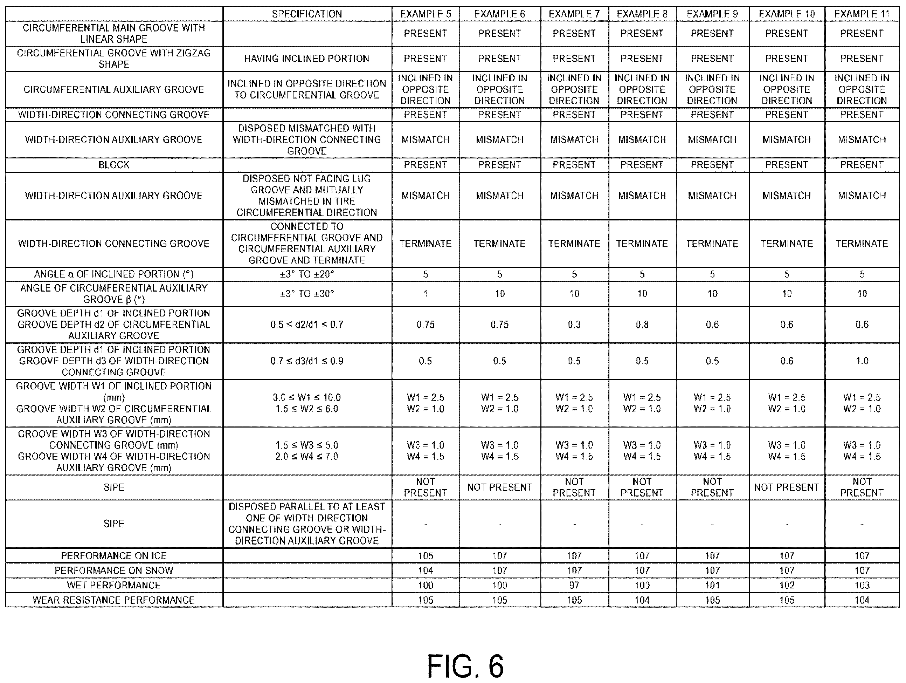

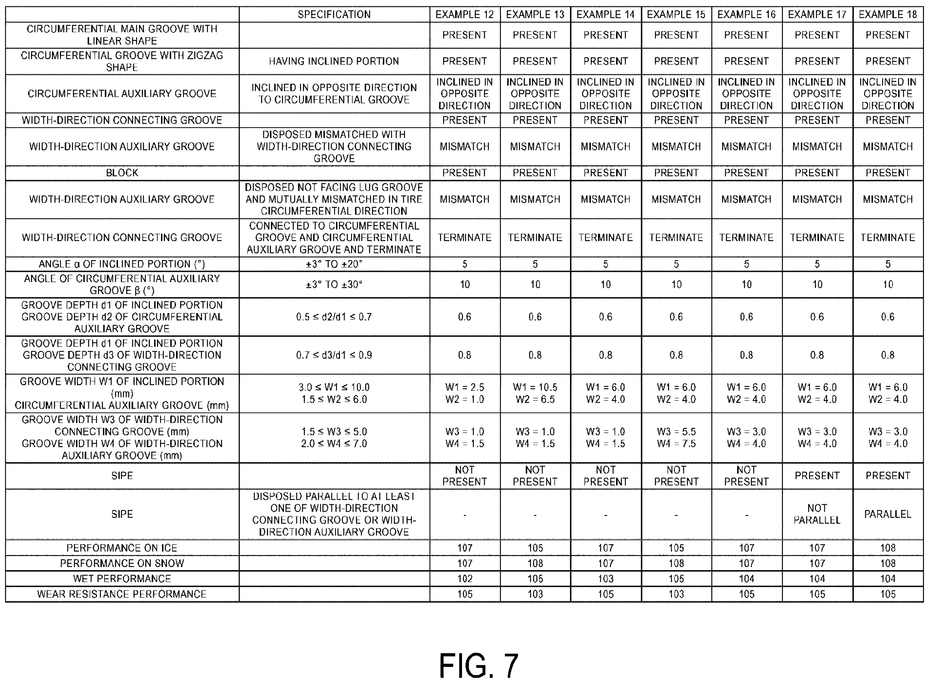

FIGS. 5 to 7 are tables showing the results of performance tests of pneumatic tires according to embodiments. Hereinafter, evaluation tests of performance conducted on pneumatic tires of a Conventional Example, pneumatic tires of a Comparative Example, and pneumatic tires of Examples according to embodiments will be described. For performance evaluation tests, tests on performance on ice, performance on snow, wet performance, and uneven wear resistance performance were performed.

The performance evaluation tests were performed by assembling pneumatic tires 1 having a tire nominal size of 195/65R15 91Q specified by JATMA on JATMA standard rim wheels having a rim size of 15 x 6.5J, mounting the test tires on an evaluation vehicle of front-wheel drive of 1800 cc engine displacement, adjusting air pressure to 240 kPa for front wheels and to 240 kPa for rear wheels, and then traveling by the evaluation vehicle.

In the evaluation test of the performance on snow, a braking test is performed on a test course with icy road surfaces by using an evaluation vehicle on which the test tires are mounted, and a braking distance is measured. On the basis of the measurement results, the evaluation is expressed as index values with the reciprocal of the Conventional Example being assigned the reference (100). In the evaluation, larger values are preferable.

In the evaluation test of the performance on snow, a braking test is performed on a test course with snow-covered road surfaces by using an evaluation vehicle on which the test tires are mounted, and a braking distance is measured. On the basis of the measurement results, the evaluation is expressed as index values with the reciprocal of the Conventional Example being assigned the reference (100). In the evaluation, larger values are preferable.

In the evaluation test of the wet performance, a braking test is performed on a test course of a wet road surface with water depth of 1 mm by using an evaluation vehicle on which the test tires are mounted, and braking distance is measured. On the basis of the measurement results, the evaluation is expressed as index values with the reciprocal of the Conventional Example being assigned the reference (100). In the evaluation, values are preferable, and a value of 97 or more is preferable in order to provide both wet performance and wear resistance performance in a compatible manner.

In the evaluation test of the wear resistance performance, the amount of wear was measured after traveling 10000 km on a dry asphalt pavement test course with an evaluation vehicle on which the test tires are mounted. On the basis of the measurement results, the evaluation is expressed as index values with the reciprocal of the Conventional Example being assigned the reference (100). In the evaluation, larger values are preferable.

The pneumatic tire of the Conventional Example includes a circumferential main groove with a linear shape, a circumferential groove having a zigzag shape, a circumferential auxiliary groove, a width-direction connecting groove, and a width-direction auxiliary groove, and the circumferential groove and the circumferential auxiliary groove are inclined in opposite directions, but the width-direction auxiliary groove matches with the width-direction connecting groove.

The pneumatic tire of the Comparative Example includes a circumferential main groove with a linear shape, a circumferential groove having a zigzag shape, a circumferential auxiliary groove, a width-direction connecting groove, and a width-direction auxiliary groove, and the width-direction auxiliary groove does not match with the width-direction connecting groove, but the circumferential groove and the circumferential auxiliary groove are inclined in the same direction.

The pneumatic tire of the Examples includes a circumferential main groove with a linear shape, a circumferential groove having a zigzag shape, a circumferential auxiliary groove, a width-direction connecting groove, and a width-direction auxiliary groove, and the circumferential groove and the circumferential auxiliary groove are inclined in opposite directions, and the circumferential groove and the circumferential auxiliary groove are inclined in the same direction.

As can be seen from the test results, in the pneumatic tires of the present Examples, the performance on ice, the performance on snow, wet braking performance, and wear resistance performance are improved with respect to the Conventional Example and the Comparative Example.

The present disclosure includes the following inventions.

### Invention 1

A tire, including:
a circumferential main groove linearly formed along a tire circumferential direction;
a circumferential groove formed along the tire circumferential direction and including an inclined portion that is inclined in a predetermined direction with respect to the tire circumferential direction and continues in a zigzag shape in the tire circumferential direction;
a circumferential auxiliary groove that is provided between the circumferential groove and the circumferential main groove, is adjacent to the inclined portion in a tire width direction, and is inclined in a direction opposite to the predetermined direction of the inclined portion with respect to the tire circumferential direction;
a width-direction connecting groove connecting both ends of the inclined portion and the circumferential auxiliary groove and defining a block continuing in the tire circumferential direction; and
a width-direction auxiliary groove connecting a central portion of the circumferential auxiliary groove and the circumferential main groove and disposed mismatched with the width-direction connecting groove.

### Invention 2

The tire according to the Invention 1, wherein the width-direction auxiliary groove connecting to the circumferential main groove is disposed not facing a lug groove connecting to an opposite side of the circumferential main groove in the tire width direction and mutually mismatched in the tire circumferential direction.

### Invention 3

The tire according to the Invention 1 or 2, wherein the width-direction connecting groove connects to the circumferential groove and the circumferential auxiliary groove and terminates inside a land portion defined by the circumferential main groove and the circumferential groove.

### Invention 4

The tire according to any one of the Inventions 1 to 3, wherein the inclined portion has an angle α with respect to the tire circumferential direction in a range -20° ≤ α ≤ -3° or 3° ≤ α ≤ 20°.

### Invention 5

The tire according to any one of the Inventions 1 to 4, wherein the circumferential auxiliary groove has an angle β with respect to the tire circumferential direction in a range 3° ≤ β ≤ 30° or -30° ≤ α ≤ -3°.

### Invention 6

The tire according to any one of the Inventions 1 to 5, wherein a groove depth d1 of the inclined portion and a groove depth d2 of the circumferential auxiliary groove satisfy a relationship 0.5 ≤ d2/d1 ≤ 0.7.

### Invention 7

The tire according to any one of the Inventions 1 to 6, wherein a groove depth d1 of the inclined portion and a groove depth d3 of the width-direction connecting groove satisfy a relationship 0.7 ≤ d3/d1 ≤ 0.9.

### Invention 8

The tire according to any one of the Inventions 1 to 7, wherein a groove width W1 of the inclined portion and a groove width W2 of the circumferential auxiliary groove are in ranges 3.0 mm ≤ W1 ≤ 10.0 mm and 1.5 mm ≤ W2 ≤ 6.0 mm.

### Invention 9

The tire according to any one of the Inventions 1 to 8, wherein a groove width W3 of the width-direction connecting groove and a groove width W4 of the width-direction auxiliary groove are in ranges 1.5 mm ≤ W3 ≤ 5.0 mm and 2.0 mm ≤ W4 ≤ 7.0 mm.

### Invention 10

The tire according to any one of the Inventions 1 to 9, wherein a plurality of sipes extending along the tire width direction are disposed in a land portion defined by the circumferential groove and the circumferential main groove.

### Invention 11

The tire according to any one of the Invention 10, wherein the sipe is disposed parallel to at least one of the width-direction connecting groove or the width-direction auxiliary groove.

### Reference Signs List

1 Pneumatic tire (Tire)
31 Circumferential main groove
32 Circumferential groove
32A Inclined portion
32Aa End
33 Circumferential auxiliary groove
33a End
34 Width-direction connecting groove
35 Width-direction auxiliary groove
36 Lug groove
37 Sipe
W1 Groove width
W2 Groove width
W3 Groove width
W4 Groove width
α Angle
β Angle

## Claims

1. A tire, comprising:
a circumferential main groove linearly formed along a tire circumferential direction;
a circumferential groove formed along the tire circumferential direction and comprising an inclined portion that is inclined in a predetermined direction with respect to the tire circumferential direction and continues in a zigzag shape in the tire circumferential direction;
a circumferential auxiliary groove that is provided between the circumferential groove and the circumferential main groove, is adjacent to the inclined portion in a tire width direction, and is inclined in a direction opposite to the predetermined direction of the inclined portion with respect to the tire circumferential direction;
a width-direction connecting groove connecting both ends of the inclined portion and the circumferential auxiliary groove and defining a block continuing in the tire circumferential direction; and
a width-direction auxiliary groove connecting a central portion of the circumferential auxiliary groove and the circumferential main groove and disposed mismatched with the width-direction connecting groove.

2. The tire according to claim 1, wherein the width-direction auxiliary groove connecting to the circumferential main groove is disposed not facing a lug groove connecting to an opposite side of the circumferential main groove in the tire width direction and mutually mismatched in the tire circumferential direction.

3. The tire according to claim 1, wherein the width-direction connecting groove connects to the circumferential groove and the circumferential auxiliary groove and terminates inside a land portion defined by the circumferential main groove and the circumferential groove.

4. The tire according to claim 1, wherein the inclined portion has an angle α with respect to the tire circumferential direction in a range -20° ≤ α ≤ -3° or 3° ≤ α ≤ 20°.

5. The tire according to claim 1, wherein the circumferential auxiliary groove has an angle β with respect to the tire circumferential direction in a range 3° ≤ β ≤ 30° or -30° ≤ α ≤ -3°.

6. The tire according to claim 1, wherein a groove depth d1 of the inclined portion and a groove depth d2 of the circumferential auxiliary groove satisfy a relationship 0.5 ≤ d2/d1 ≤ 0.7.

7. The tire according to claim 1, wherein a groove depth d1 of the inclined portion and a groove depth d3 of the width-direction connecting groove satisfy a relationship 0.7 ≤ d3/d1 ≤ 0.9.

8. The tire according to claim 1, wherein a groove width W1 of the inclined portion and a groove width W2 of the circumferential auxiliary groove are in ranges 3.0 mm ≤ W1 ≤ 10.0 mm and 1.5 mm ≤ W2 ≤ 6.0 mm.

9. The tire according to claim 1, wherein a groove width W3 of the width-direction connecting groove and a groove width W4 of the width-direction auxiliary groove are in ranges 1.5 mm ≤ W3 ≤ 5.0 mm and 2.0 mm ≤ W4 ≤ 7.0 mm.

10. The tire according to claim 1, wherein a plurality of sipes extending along the tire width direction are disposed in a land portion defined by the circumferential groove and the circumferential main groove.

11. The tire according to claim 10, wherein the sipe is disposed parallel to at least one of the width-direction connecting groove or the width-direction auxiliary groove.
